# EUROPEAN PATENT SPECIFICATION

(11) **EP 3 956 738 B1**
(45) Date of publication and mention of the grant of the patent: **13.12.2023**
(21) Application number: 20785695.6
(22) Date of filing: 25.09.2020
(51) Int. Cl.: G05B 23/02, G06N 3/08, G06N 5/00

(54) **TEST APPARATUS FOR TESTING AN AIRCRAFT SYSTEM**
TESTVORRICHTUNG ZUM TESTEN EINES FLUGZEUGS
APPAREIL DE TEST POUR TESTER UN AÉRONEF

(30) Priority: 30.09.2019 GB 201914091
(43) Date of publication of application: 23.02.2022
(73) Proprietor: Airbus Operations Limited, Bristol BS34 7PA (GB)
(72) Inventor: HOWELL, George, Bristol BS34 7PA (GB)
(74) Representative: EIP
(86) International application number: PCT/EP2020/076916
(87) International publication number: WO 2021/063830

(56) References cited:
- EP-A1- 3 260 943
- US-A- 5 023 791
- US-A1- 2006 074 501
- US-A1- 2008 082 302

## Description

### TECHNICAL FIELD

The present invention relates to testing at least part of an aircraft system. In particular, but not exclusively, the present invention relates to test apparatus for testing an operation of the at least part of an aircraft system based on an operation modelled by a classifier.

### BACKGROUND

Aircraft typically comprise a multitude of systems, the development and testing of which can involve a considerable amount of time and expense. Systems that can assist in development and testing of aircraft are therefore desirable. US 5 023 791 A discusses an automated test apparatus for testing the flight controls system of an aircraft as part of an integrated system for testing a plurality of aircraft systems. EP 3 260 943 A1 discusses hybrid feature selection methods including methods of creating a predictive model for structural repair during heavy maintenance in a fleet of aircraft. US 2008/082302 A1 discusses methods and systems to detect abnormal operations in a process of a process plant. US 2006/0074501 A1 discusses methods and apparatus for training a system model with gain constraints. A method is disclosed for training a steady-state model having an input, an output, and a mapping layer for mapping the input to the output through a stored representation of the system.

### SUMMARY

A first aspect of the present invention provides test apparatus for testing at least part of an aircraft system, the apparatus comprising at least one memory and at least one processor, the test apparatus comprising programme code stored in the at least one memory and being configured to: obtain first data comprising a plurality of input value representing an operating state of an aircraft; process the plurality of input values using a trained classifier configured to model an operation of at least part of an aircraft system to generate a first set of output values; obtain second data comprising a second set of output values generated by operating the at least part of an aircraft system based on the plurality of input values; process the first and second sets of output values to identify any difference between operation of the at least part of an aircraft system and the operation modelled by the trained classifier; and generate a signal indicative of the identified difference.

This may allow differences between a desired operation of an aircraft system and the way the actual aircraft system operates to be identified. Once identified, the aircraft system can be updated and/or modified such that its operation more closely matches the desired operation. The operation may include the way in which the aircraft system interacts with a user, such as flight crew, via one or more user displays, and or the way equipment operates in the aircraft system.

Optionally, the test apparatus is configured to: obtain training data representing a desired operation of the at least part of an aircraft system for at least one operating state, the training data comprising a further plurality of input values and a respective set of output values; and train the classifier using the training data.

Training the classifier based on training data representing a desired operation of the at least part of the aircraft system allows the classifier to continue to identify differences between the aircraft system as designed, and the desired operation of the aircraft system. Training may allow the classifier to be updated to account for changes in desired operation of the aircraft system.

Optionally, the test apparatus is in communication with at least one mobile computing device, and the test apparatus is configured to receive data indicative of a decision of a user of the at least one mobile computing device with respect to an operation of the at least part of an aircraft system, and wherein the test apparatus is configured to generate training data based on the received data.

Mobile computing devices may provide an efficient way of collecting data from users such that the training data can accurately represent the operation of the at least part of an aircraft system from the perspective of the users. In this context, 'users' may include at least air crew (including pilots), ground crew or maintenance crew who may work on or off aircraft and/or fleet managers.

Optionally, the test apparatus is configured to generate training data based on the identified difference.

This may allow the classifier to be trained based on its current performance. For example, where the classifier correctly identifies a difference then this identification can be reinforced and where the classifier incorrectly identifies a difference the classifier can be updated to avoid such an error in the future.

Optionally, generating training data based on the identified difference comprises comparing the identified difference with a user input indicative of a decision with respect to the identified difference.

This may allow the feedback which is given to the classifier to represent actual desired functionality of the aircraft system. The desired functionality as perceived by a user may change and, therefore, continuously providing it in this way may allow the test apparatus to evolve with changing preferences.

Optionally, the plurality of input values represent at least one of: an operational state of at least one component associated with the aircraft system; and an output from at least one sensor configured to sense a respective environmental condition.

This may allow the test apparatus to identify differences in operation of the aircraft system and the classifier based on a plurality of input values which are dependent both on internal factors, as defined by components of the system, and external or environmental factors, which may affect the operation of the aircraft.

Optionally, an operational state of at least one component associated with the aircraft system includes a control input, the control input including at least one of: a value representing a control input; a value representing a rate of change of the control input; and a value representing a difference between the control input and a further control input.

Optionally, the at least part of an aircraft system is a computer program for controlling at least part of an aircraft.

In this way, the test apparatus may test the functionality of computer programs in the aircraft.

Optionally, the at least part of an aircraft system comprises a combination of aircraft equipment and a computer program for operating an aircraft.

In this way the test apparatus may test the functionality of systems in the aircraft which include both computer programs and the operation of components and equipment in the aircraft.

Optionally, the at least part of an aircraft system comprises aircraft equipment, the aircraft equipment comprising at least one sensor for generating the second set of output values.

In this way the test apparatus may test the functionality of components in the aircraft which are operated mechanically and/or electrically but which do not rely on a computer program to control their operation.

Optionally, the at least part of an aircraft system includes at least one of: an avionic system, a flight control system, a braking control system, an instrumentation and recording system, a landing gear control system and a fuel system.

A second aspect of the present invention provides a method for testing at least part of an aircraft system, the method comprising: obtaining first data comprising a plurality of input values representing an operating state of an aircraft; processing the plurality of input values using a trained classifier configured to model an operation of at least part of an aircraft system to generate a first set of output values; generating second data comprising a second set of output values by operating the at least part of an aircraft system based on the plurality of input values; processing the first and second sets of output values to identify any difference between operation of the at least part of an aircraft system and the operation modelled by the trained classifier; and generating a signal indicative of the identified difference.

This may allow differences between a desired operation of an aircraft system and the way the actual aircraft system operates to be identified. Once identified, the aircraft system can be updated and/or modified such that its operation more closely matches the desired operation. The operation may include the way in which the aircraft system interacts with a user, such as flight crew, via one or more user displays, and or the way equipment operates in the aircraft system.

Optionally, the method comprises: obtaining training data representing a desired operation of the at least part of an aircraft system for at least one operating state; and training the classifier using the training data.

Training the classifier based on training data representing a desired operation of the at least part of the aircraft system allows the classifier to continue to identify differences between the aircraft system as designed, and the desired operation of the aircraft system. Training may allow the classifier to be updated to account for changes in desired operation of the aircraft system.

Optionally, the training data is generated from a further aircraft system during operation of the further aircraft system.

In this way, the test apparatus can identify differences between the operation of the at least part of an aircraft system and an operation of another aircraft under real world conditions. This may increase the accuracy of the test apparatus when used to test real world scenarios.

Optionally, the training data is generated based on an input from a user indicative of a decision with respect to at least one operating state of an aircraft.

Accounting for a user decision may increase the reliability of the training data. A user can identify where the training data is incorrect or is not representative of a desired operation of the at least part of the aircraft system.

Optionally, the method comprises generating further training data based on the identified difference and training the classifier using the further training data.

This may provide a feedback loop in which the capabilities of the test apparatus to correctly identify differences are used to reinforce the training of the classifier.

Optionally, the method comprises modifying the at least part of an aircraft system based on the identified difference.

This allows the at least part of the aircraft system to be adjusted to correct for identified differences in the operation of the system and a desired operation. In this way the at least part of the aircraft system may more closely function as desired.

A third aspect of the present invention provides an aircraft comprising one or more aircraft systems, at least one of the one or more aircraft systems having been tested according to the method as described above.

A fourth aspect of the present invention provides a test aircraft comprising one or more aircraft systems and test apparatus as described above for testing at least part of the one or more aircraft systems comprised in the test aircraft.

A fifth aspect of the present invention provides a test system for testing aircraft control system, the system comprising memory, a processor, a control input interface for receiving aircraft control inputs and a control output interface for receiving aircraft control outputs, the test system being configured to: receive aircraft control inputs via the control input interface; process the aircraft control inputs using a trained model of expected behaviour for the aircraft control software under test to determine expected control outputs; receive actual control outputs from the aircraft control software via the control output interface; compare the expected control outputs to the actual control outputs to identify differences between them; and generate a signal indicative of a difference between the expected control outputs and the actual control outputs.

This may allow differences between a desired operation of an aircraft system and the way the actual aircraft system operates to be identified. Once identified, the aircraft system can be updated and/or modified such that its operation more closely matches the desired operation. The operation may include the way in which the aircraft system interacts with a user, such as flight crew, via one or more user displays, and or the way equipment operates in the aircraft system.

A sixth aspect of the present invention provides a test system for testing aircraft control software, the system comprising: a memory; a control input interface to receive aircraft control inputs and store the inputs in the memory; a model processing engine to process the aircraft control inputs using a trained model of expected behaviour for aircraft control software under test, to determine expected control outputs and to store the outputs in the memory; a control output interface to receive actual aircraft control outputs and store the outputs in the memory; a difference engine to compare the expected control outputs to the actual control outputs to identify any differences between them; and an output generator to generate a signal indicative of a difference identified by the difference engine.

### BRIEF DESCRIPTION OF THE DRAWINGS

Embodiments of the invention will now be described, by way of example only, with reference to the accompanying drawings, in which:
Figure 1 is a block diagram of a test apparatus according to an example;
Figure 2 is a block diagram of illustrating an operation of a test apparatus according to an example;
Figure 3 is a block diagram of a training process according to an example;
Figure 4 is a block diagram illustrating an operation of a test apparatus according to an example;
Figure 5 is a flow diagram illustrating a method according to an example; and
Figure 6 is an illustrative view of an aircraft according to an example.

### DETAILED DESCRIPTION

Aircraft systems are becoming increasingly more complex. With the advance of technology and increased automation, the capabilities of aircraft are increasing. As a result, the systems which are used to monitor and control aircraft, as well as those systems designed to interact with operators of aircraft, such as flight crew, are growing increasingly more complex to design. In particular, although an aircraft system may be designed based on an expected operation, which is desired in a majority of cases, actual use of the aircraft may highlight other cases where, for example, flight crew might anticipate or prefer an aircraft system to behave and/or respond in a different way than has been designed.

Once an aircraft system has been implemented, it may not be possible to modify the aircraft system for some time due to the practicalities of developing, testing, and rolling-out the new system and, in particular, revised software. Further, during the testing of an aircraft system, if it is discovered that the system does not operate as desired, then the development of the system may regress back to the stage where the highlighted difference was first implemented, and the testing may then need to be repeated.

Identifying differences between an aircraft system and a desired operation of the aircraft system, as determined by, for example, potential operators of the aircraft, early during the development and testing process, may reduce the time needed to develop aircraft systems as well as reducing the need for system revision or modification, thereby increasing the effectiveness of such a system.

Certain examples described herein relate to comparing the operation of an aircraft system to an output of a classifier which models an operation of the aircraft system. The classifier is trained using data representing a desired operation of the aircraft system. The aircraft system may then be configured based on this comparison such that the system operates as desired in a given situation. The classifier may be continually trained such that it adapts to a desired operation of the aircraft system, which may change over time, for instance as practices, expectations and procedures evolve.

Beneficially, according to examples, the classifier is trained using at least some information and data that is independent of the aircraft design process. In contrast, known methods of testing aircraft systems, and in particular control software for aircraft systems, may involve conducting code run-throughs, by the software design teams, and using test scripts and debuggers, which may also be devised by the software design teams. A possible downside of the known methods is that scenarios beyond the scope of specification may not be addressed by the software design teams in the control software and in code run-throughs, test scripts and debuggers. Such code run-throughs, test scripts and debuggers may not therefore pick up on the desired differences in operation for these specific scenarios.

Information and data used to train the classifier may be derived from various sources, at least some of which are independent of the design process. For example, a majority of systems and operations of a new aircraft design may be the same as or very similar to the design and operations of existing aircraft. Accordingly, information and data associated with the operation of existing kinds of aircraft, which are known to be correct, is used to train the classifier according to some examples. In most cases, perceptions of a software design team and aircraft users, such as aircrew, on aircraft operation and design parameters will be the same. For example, both sets of people would agree that a reduction in braking performance, should be identified immediately to the pilot. Other scenarios are not as clear cut, and certain subjective criteria, for instance based on the experience of an aircrew, may need to be factored in. In such cases, the opinions of a software design team and aircraft users may diverge. While steps will obviously be taken to ensure the chances of this happening are minimised, not every conceivable scenario that could arise can be designed for and/or tested. This often leads to the need for aircraft control software to be revised and rolled-out after a new aircraft has already entered service, which is a time-consuming and expensive process. For example, as will be described herein in relation to an example, a software design team legitimately may perceive a certain aircraft operating scenario to warrant a warning condition, whereas experienced aircrew may not perceive the scenario to warrant a warning condition. According to examples, therefore, experience and input from users such as aircrew may also be used to train the classifier.

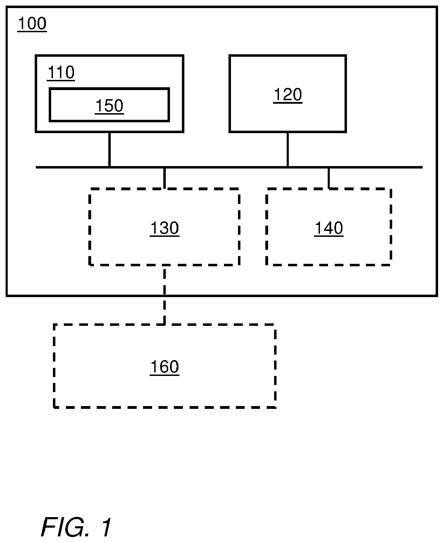

Figure 1 shows an example test apparatus 100, for testing at least part of an aircraft system, according to an example. The test apparatus 100 comprises at least one memory 110 and at least one processor 120. The memory 110 may be any suitable combination of volatile and non-volatile memories including random-access memory (RAM), read-only memory (ROM), synchronous dynamic random-access memory (SDRAM), or any other suitable type of memory. The at least one processor 120 may include any one or more of a central processing unit (CPU), a graphics processing unit (GPU), an application specific instruction set processor (ASIP) or any other suitable processing device. The test apparatus 100 may comprise at least one interface 130, shown in broken lines in Figure 1. Such an interface 130 may be operable to communicate with one or more computing devices 160 and/or at least part of an aircraft system. The test apparatus 100 may also comprise a user interface 140 for interfacing with a user. In an example, the user interface 140 comprises a graphical display for displaying system information such as status information and/or at least one user input device to receive an input from a user to control the test apparatus 100. The test apparatus 100 is shown in Figure 1 as a single device. However, it is to be understood that the test apparatus 100 may comprise distributed devices, for example a plurality of distributed computing devices communicatively coupled over a wired or wireless network. In any event, the test apparatus may operate by executing respective test software 150, which may be loaded into main memory 110 and executed by the processor 120 at runtime.

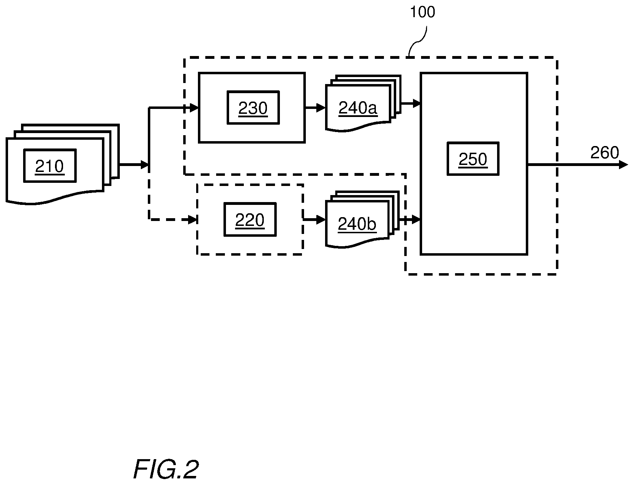

Figure 2 shows a block diagram illustrating in more detail elements of the test apparatus 100 according to an example. The block diagram shows input data 210 being processed by at least part of an aircraft system 220 and, independently, by a trained classifier 230. The outputs from the system 220 and the classifier 230 are then processed by a processing engine at a block 250 to generate a signal 260. The trained classifier 230 is implemented by the apparatus 100, wherein the memory 110 comprises a set of instructions 150, which, when executed by the processor 120, implement the classifier 230 and the processing engine 250.

The test apparatus 100 is configured to obtain first data 210 comprising a plurality of input values representing an operating state of an aircraft. An operating state of an aircraft may include a state of one or more components in or on the aircraft as well as indications of environmental conditions in which the aircraft is operating. According to the present example, the plurality of input values represent at least one of an operational state of at least one component associated with the aircraft system and an output from at least one sensor configured to sense a respective environmental condition. The first data 210 may represent an instantaneous state of an aircraft, wherein the first data 210 represents a state of one or more components or environmental conditions at a given moment, or at consecutive moments, in time. Alternatively, the first data 210 may represent a dynamic state of an aircraft, wherein the first data 210 comprises values representing a period of time in the operation of the aircraft, in which case the first data 210 comprises a plurality of dynamically changing values representing each input.

An operational state of at least one component associated with the aircraft system may comprise a control input. Such a control input may be due to aircrew such as a pilot operating or actuating a device, apparatus or system. The control input may include a value of a control input, for example, a value representing the position of a throttle, a braking actuator, and/or other control inputs. Alternatively or additionally, a control input may comprise a rate of change rather than a value. In some examples, the control input may be a multivariate quantity indicating both an instantaneous value (e.g. a position) and a rate and/or direction of change. The control input may be represented by a plurality of values or a plurality of multivariate quantities expressing an operation of a device, apparatus or system over a defined period. The control input may include a value representing a difference between the control input and a further control input, for example a difference between the position of a first throttle corresponding to a first engine and the position of a second throttle corresponding to a second engine.

First data 210 may be obtained from an external device over a network, for example the data 210 may be collected in real time from an operating aircraft or aircraft simulation (or a mix of the two) and transmitted to the apparatus 100, allowing the aircraft system 220 to be tested against real operating situations and associated parameters. Alternatively, the first data 210 may be transmitted to the apparatus 100 by test personnel, allowing the test apparatus 100 to be remotely operated and/or operated `after the event'.

First data 210 may include stored datasets, including sets of actual data that were collected from operating aircraft. Alternatively, or additionally, the stored datasets include data generated by test personnel to test certain scenarios. Test personnel may generate first data 210 manually by selecting or devising a plurality of input values which represent each respective input to the at least part of an aircraft system 210. Alternatively, test personnel may generate first data 210 using statistical methods. For example, the aircraft system 220 may be configured to receive a plurality of inputs, and the value for each input may be represented using a probability distribution. The probability distributions may be based on physical laws, operational limits of components, and/or generated from actual data. The probabilities may be used to generate datasets representing possible states of the aircraft, including states which are not represented in actual data from operating aircraft. In any case, these approaches enable a range of real and theoretical or contrived scenarios to be tested.

For example, when testing a braking control system, the plurality of input values may indicate operational states of one or more hydraulic systems which are configured to operate the brakes, as well as the status of one or more alternative (e.g. electrical) motors and respective power sources for operating the brakes in the event of hydraulic failure. The plurality of input values may also comprise other relevant information, for example, an operational state of the engines of the aircraft, an indication of whether there is weight-on-wheels, and indications of environmental conditions such as wind speed and direction, and outside temperature and humidity, derived from one or more aircraft sensors. The plurality of input values may represent states of equipment comprised in other aircraft systems. There may be correlation with or a link between the operation of one or more further aircraft systems and the system being tested.

Returning to Figure 2, the test apparatus 100 is configured, based on the obtained first data 210, to process the plurality of input values using the trained classifier 230, which is configured to model an operation of at least part of an aircraft system 220 to generate a first set of output values 240a.

The test apparatus 100 is also configured, based on the plurality of input values, to obtain second data comprising a second set of output values 240b generated by operating the at least part of an aircraft system 220. The aircraft system, which is tested using the apparatus 100, may be any of a plurality of aircraft systems. In some examples, the at least part of an aircraft system 220 is a computer program, or `control software', for controlling at least part of the aircraft. For example, the at least part of a system 220 may comprise a firmware specifically configured to monitor and/or control the operation of one or more components of the aircraft. In some examples, the at least part of a system 220 is configured to interface with an operator of the aircraft such as a member of the flight crew. Where the at least part of an aircraft system 220 is a computer program, operating the least part of the aircraft system 220 based on the plurality of input values may comprise running the computer program and introducing the input values thereto. The at least part of an aircraft system 220 comprising a computer program may include the control software and may also simulate at least some aircraft equipment. For example, rather than having the control software run in conjunction with particular equipment, a simulation of the behaviour of the equipment may be used instead. For example, the computer program may be configured to simulate the function of aircraft equipment and in particular the interaction between the control software under test and the aircraft equipment. This may reduce costs in the testing phase and provide greater flexibility in the scenarios which can be tested. For example, the operation of and interaction with equipment that is not yet incorporated into an overall system may be achieved using respective simulations.

In the examples described herein, the number of values in the first data and the size of the sets of output values 240a, 240b may depend on the actual aircraft system which is being modelled. In some examples, the classifier 230 generates a different number of output values than the aircraft system which is being tested. For example, the classifier 230 may generate a value which is correlated with the output values from the actual aircraft system, and processing the sets of output values may comprise processing the output values from the actual aircraft system 220 to generate data which can be directly compared with the output values from the classifier 230.

In other examples, the at least part of an aircraft system 220 comprises a combination of aircraft equipment and a computer program for operating the at least part of an aircraft, including the or at least some of the aircraft equipment. For example, a control program, included in the at least part of an aircraft system 220, controlling equipment of the aircraft, takes in inputs from the equipment under control and/or other parts of the aircraft. The control program monitors these inputs to check whether the corresponding equipment is operating correctly and/or to adjust things being controlled. The control program can provide feedback to a user display. For example, where the at least part of an aircraft system 220 is operating to adjust braking torque to slow down an aircraft, the inputs may include speed measurements, current torque levels being applied, indications of which brakes are operating and a level of heat being generated at each brake. Some or all of this information may be displayed to a user such that they can monitor the operation and ensure that it is functioning correctly. In some examples, the at least part of an aircraft system 220 is part of a test rig. The test rig comprising one or more aircraft systems which are being tested during a development stage before being deployed in one or more aircraft. Alternatively, the at least part of an aircraft system 220 may be tested while in an operational test aircraft.

Alternatively, the at least part of an aircraft system 220 may not comprise a computer program, but may instead comprise aircraft equipment, the aircraft equipment comprising at least one sensor for generating the second set of output values 240b. In this case, operating the at least part of the aircraft system 220 based on the input values comprises inducing an operating state, represented by the input values, in the at least part of the system 220.

As discussed, the at least part of an aircraft system 220 may comprise a part of any suitable system in an aircraft. For example, the at least part of an aircraft system may comprise one or more of: an avionics system, a flight control or navigation system, a braking control system (or other hydraulic control system), an instrumentation and recording system, a landing gear control system and a fuel system.

The test apparatus 100 then processes, for example using the processing engine 250, the first 240a and second 240b sets of output values to identify any difference between operation of the at least part of an aircraft system 220 and the operation modelled by the trained classifier 230. In this way, the test apparatus 100 is able to highlight any differences between the way the actual at least part of an aircraft system 220 responds and/or operates under certain conditions and how it is expected or desired to be operating under those conditions. The inference being generated based on the model of the operation as implemented by the classifier. In some examples, processing the two sets of output values 240a, 240b may comprise performing a comparison between respective output values to identify any differences. In other examples, processing the two sets of output values 240a, 240b may comprise performing a comparison of respective values to identify differences which are beyond a given tolerance and/or confidence level, for example, within 10%. In these examples, the processing engine 250 may operate as or comprise a comparator or similar processing element. In further examples, the processing of the two sets of output values 240a, 240b may involve more complex processing configured to identify patterns or trends in the output values which are indicative of a difference between the operation of the at least part of an aircraft system 220 and the operation modelled by the trained classifier 230.

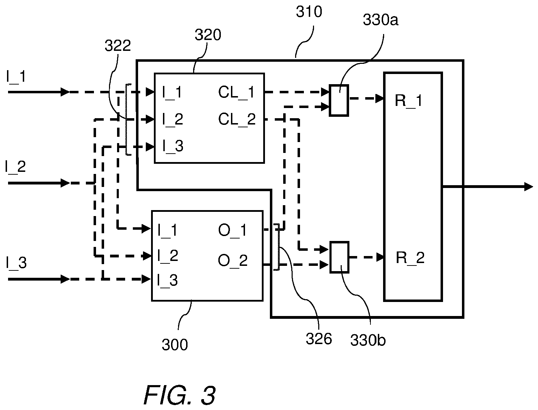

Figure 3 shows schematically a more detailed example of testing at least part of an aircraft system 300. In Figure 3, the at least part of an aircraft system 300 which is being tested is a computer program and so may be implemented by a test apparatus 310. The test apparatus 310 may concurrently process a plurality of input values I_1, I_2, 1_3 using a trained classifier 320 and may implement, or run, a test version of the at least part of the aircraft system 300 using the input values I_1, I_2, I_3. For example, the test apparatus 310 may implement one or more virtual environments in which the classifier 320 and the aircraft system 300, comprising a computer program, may be run to generate respective sets of output values.

The classifier 320 receives, via a control input interface 322, and processes the plurality of input values I_1, I_2, I_3 to generate a first set of expected output values CL_1, CL_2. The plurality of input values I_1, I_2, I_3 may comprise input values representing operational states of components in an aircraft and/or one or more environmental conditions which may constrain the operational state of the aircraft. While the first set of output values is shown to comprise two values, it is to be understood that the first set of output values could comprise more or fewer values than the plurality of input values. In some examples, a set of output values comprises just one output value.

The at least part of an aircraft system 300 is operated based on the plurality of input values I_1, I_2, I_3, which in this example comprises using the plurality of input values I_1, I_2, 1_3 as inputs to the computer program comprised in the at least part of an aircraft system 300. The at least part of an aircraft system 300 generates a second set of output values O_1, O_2, which are received by the test apparatus 310 via a control output interface 326. The first and second sets of output values are then processed by one or more comparison modules 330a, 330b, for instance operating as a processing engine 250. In the example shown, the first comparison module 330a is configured to compare output values CL_1 and O_1, and the second comparison module 330b is configured to compare output values CL_2 and O_2. Results R_1, R_2 of these comparisons are then used to identify any differences between the operation modelled by the classifier 320 and the at least part of an aircraft system 300. In some examples, this may comprise performing some further processing using any suitable statistical methods to identify trends and or systematic differences between the sets of output values which are indicative of differences between the modelled operation and the operation of the actual aircraft system.

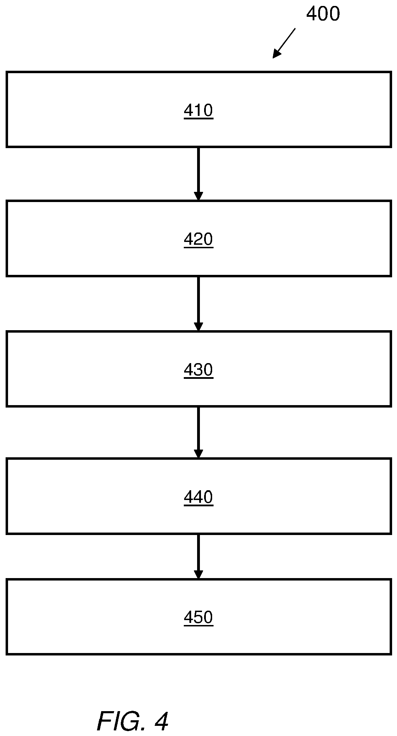

Figure 4 shows a flow chart of a method 400 for testing at least part of an aircraft system according to an example. At block 410, the method 400 comprises obtaining first data comprising a plurality of input values representing an operating state of an aircraft. At block 420, the method 400 comprises processing the plurality of input values using a trained classifier configured to model an operation of at least part of an aircraft system to generate a first set of output values. At block 430, the method 400 comprises generating second data comprising a second set of output values by operating the at least part of an aircraft system based on the plurality of input values. At block 440, the method 400 comprises processing the first and second sets of output values to identify any difference between operation of the at least part of an aircraft system and the operation modelled by the trained classifier. At block 450, the method 400 comprises generating a signal indicative of the identified difference. The method 400 may further comprise modifying the at least part of an aircraft system based on the identified difference. In this way, the aircraft system is altered such that it operates in a way which is closer to the desired operation of the aircraft system.

Modifying the at least part of an aircraft system based on the identified differences may be performed in a variety of ways. In one example, the results of the comparison may be provided to developers of the aircraft system. The developers may then review the differences and modify the design of the aircraft system such that it conforms to the operation as determined by the classifier. Alternatively, the test apparatus, when comparing the outputs from the aircraft system and from the test apparatus, may be configured to highlight a specific part of the aircraft system which is to be changed such that the operation of the aircraft system matches the operation as determined by the classifier. In another example, the test apparatus may be configured to generate a report based on the identified differences. The report may identify areas that require review and provide one or more suggestions for modifying the aircraft system to conform to the operation of the classifier.

An example relating to applying the test apparatus 100 to an aircraft braking control system will now be described. First data 210 includes values indicative of an operational state of components for operating the brakes. In this example, when the hydraulic pumps for operating the brakes are not operational (i.e. are off) when the aircraft is moving on the ground, the braking control system is initially specified and designed to generate an amber alert on a pilot display to indicate that the normal or primary power source is not operating and that the alternate power sources for the brakes are being used. An amber alert may be an appropriate response for the braking control system because the brakes are required to operate but are not being operated by their primary control (i.e. the hydraulic pump system). Such amber alerts, if they appear on displays before take-off, may generate concern to air crew and can lead to an aircraft being grounded with a consequential flight delay or even cancellation. Nevertheless, through use of the test apparatus 100 described herein, it can be determined that there may be some situations in which aircrew perceive that, in the scenario described, an amber alert is an inappropriate or undesired response. For example, when an aircraft is being towed with the engines switched off, and hence the normal power source (e.g. hydraulic pump) is not active, it may be deemed acceptable and indeed desirable in this situation that the alternate power source for the brakes is being used. Accordingly, an amber alert may be deemed by the aircrew to be inappropriate and, potentially, an undue cause for concern. Instead, a more appropriate pilot display may indicate that the brakes are being actuated by their alternate power source but without an amber alert. In this case, the trained classifier 230 is trained to recognise that if the primary or normal power source is inactive, while the engines are off, then the braking control system being modelled should not display an amber alert. This kind of training of the trained classifier 230 is achieved using information and data from existing aircraft and/or feedback from experienced aircrew. During testing, therefore, where the output values from the trained classifier 230 are compared to output values from the at least part of an aircraft system 220 (i.e. the braking control system), an identified difference is that an amber alert is generated by the aircraft system but not by the trained classifier 230.

On inspection, system designers will appreciate that the aircraft system 220 may benefit from a modification to take account of engine status (i.e. on or off) in evaluating whether an amber alert is appropriate when hydraulic braking is not possible. If this is identified during the design process, while the aircraft is effectively a test rig, control software can be revised with relatively little delay. If, instead, the issue is determined after a new aircraft is in service, it may take many months before new control software could be deployed. In the meantime, aircrew may need to be issued with a guidance note to warn them about the meaning of the amber alert in that particular scenario, or aircraft may be grounded unnecessarily.

In cases such as this, the test apparatus 100 may be able to identify parts of the firmware which interact with the flight crew in an undesirable manner. Learning to operate aircraft can take considerable time and resources. Therefore, if it is possible to identify and correct differences between flight crew expectations and the operation of aircraft systems, time spent learning to operate said aircraft may be reduced as the systems become more intuitive.

In another specific example, the at least part of an aircraft system 220 may be an autobraking system in the braking control system. The autobraking system is configured to engage the brakes automatically during a landing procedure and disengage automatically during a take-off procedure. In this case, the first data 210 includes values indicative of an operational state of components for operating the brakes and values indicative of the stage of a landing procedure which the plane is engaged in. This includes the weight-on-wheels, the operational state of the engines, the orientation of the aircraft, the lateral g-force, and other relevant information. Once the plane makes contact with the ground, the brakes are automatically engaged, for example based on a weight threshold and/or a sufficient time period associated with detected weight-on-wheels, to slow down the aircraft.

Occasionally, for various reasons, landing attempts are aborted, wherein the plane makes initial contact with the ground but the plane does not land and instead takes off again, before preparing for a second landing attempt. In this example, following an aborted landing attempt, a pre-programmed 'aborted landing procedure' may be deployed, which activates and/or deactivates various elements of the aircraft system in preparation for the next landing attempt. This procedure may reduce the number of system checks, compared to the number of checks that may be required for the initial landing attempt, which need to be performed by the pilots before attempting a second landing. However, in some instances, it has been found that aircrew prefer to have a full system reset after an aborted landing attempt so that they can perform the complete landing protocol, rather than a reduced aborted landing protocol, when attempting the second landing. Through the use of the test apparatus 100 described herein, it can be determined that there are some situations, as in the scenario described, in which aircrew would prefer that the autobraking system completely resets. In contrast, there may be other specific scenarios where the aircrew would prefer parts of the braking system to remain engaged, instead of fully-reset, and examples herein would also be able to identify those scenarios.

In another specific example, where the at least part of an aircraft system 220 is an autobraking system in the braking control system, the autobraking system is configured to engage the brakes automatically during a landing procedure. In practice, and without an autobraking system, different environmental and aircraft characteristics may influence the way in which an experienced operator may decide to apply the brakes during a landing procedure. The way in which the brakes are applied may result in different amounts of braking force being applied at different stages of the landing procedure. It is difficult to develop a set of rules for an automatic braking system which would accurately select the same amount of braking force which an experienced operator would choose over a wide range of scenarios. In some cases, the pilots may be operating the brakes based on experience, for instance rather than according to an operating manual, and would be able to quantify the way in which they perform braking. In this example, where the autobraking system does not select the same amount of braking as an experienced pilot would in given test scenarios the test apparatus 100 is able to quantify the differences in braking procedure as performed by experienced pilots and by the automatic braking procedure in different environmental conditions. In this way, the performance and/or behaviour of the autobraking system may be refined, by being programmed to more closely mimic the braking techniques used by experienced pilots in various landing conditions.

It will be appreciated that the foregoing examples have been simplified to aide in understanding. It is to be understood that there may be many other factors, and hence many other input values, which are used to present a given scenario which the output of the aircraft system is to be tested for. Hence, using a trained classifier, which has been trained based on a desired operation of the aircraft or on examples of operation of other aircraft, may identify exceptions to otherwise apparently sensible rules of operation. Without use of the trained classier, these exceptions may remain designed into the aircraft system, potentially leading to a need to update the system later in the development phase or even after the new aircraft (or aircraft system) has been rolled-out.

More generally, the test apparatus 100 is configured, once a difference has been identified, to generate a signal 260 indicative of the difference. This signal 260 may be used to provide information to a user of the test apparatus 100, which identifies in what way the operation of the at least part of an aircraft system 220 and the operation modelled by the trained classifier 230 differs. This may be used to inform a user such that at least part of a system 220 may be investigated and, if necessary, modified to reduce or remove the difference. The signal 260 may comprise data, a dataset or some other representation of data or information indicative of the identified difference, which may be transmitted and/or stored in memory and displayed, as appropriate.

In order for the differences which are identified to be of use, the trained classifier 230 should accurately represent a desired operation of the at least part of an aircraft system 220. To this end, the test apparatus may be configured to train the classifier 230. Alternatively, the training of the classifier may be performed elsewhere and the trained classifier 230 may be loaded into the test apparatus 100. The classifier 230 may be trained by obtaining training data representing a desired operation of the at least part of an aircraft system 220 for at least one operating state. The training data comprises at least one further plurality of input values (and preferably many more instances of input values) and at least one respective set of output values. Each of the further plurality of input values is associated with a respective set of output values. Similarly to the testing stage, the plurality of input values represent an operating state of an aircraft. The plurality of input values comprise values indicative of the state of one or more pieces of equipment in the aircraft system 220 and/or representing one or more environmental conditions associated with the state of the aircraft. The output values represent an output of the aircraft system 220 based on the input values. For example, the output values may correspond to information displayed at a user display and/or may include control parameters corresponding to the control of the aircraft system in the operational state represented by the input values.

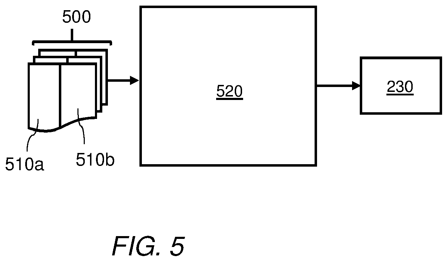

Figure 5, shows training data 500, comprising at least one further plurality of input values 510a and at least one respective set of output values 510b, being input to a training engine 520. The training engine 520 may be implemented by appropriate programme code in combination with the at least one memory 110 and the at least one processor 120; or, the training engine 520 may be deployed as part of another system entirely. In any case, the training engine 520 may process the training data 500 in an appropriate manner to generate a trained classifier 230. In some examples, the training engine 520 may be used to further train an already trained classifier 230 based on the training data 500. For example, where new training data becomes available and/or the requirements of an aircraft system change, or procedures evolve over time, the training engine 520 may continue to train and/or retrain the classifier 230. In some examples, the classifier 230 comprises a neural network. In other examples, the classifier 230 implements at least one of a random forest algorithm, a naive Bayes classifier, a support vector machine, a linear regression machine learning algorithm, or any other suitable algorithm or classifier which is suitable for the function described herein. For example, a supervised learning algorithm may be used to analyse the training data (comprising input values and respective output values) to infer a reasonable, learned function which maps the inputs to the outputs. The learned function may be represented in a neural network comprising an input layer, an output layer, and at least one hidden layer, wherein nodes of the at least one hidden layer area associated with one or more weights. Training the neural network comprises using the input values in the input layer and the output values in the output layer to generate and/or to update the one or more weights. The learned function may then be tested on a subset of the training data which was not used to train the learned function. This may allow the system to be validated before being applied to test data.

In some examples, the test apparatus 100, 310 may be configured to generate training data 300 based on an identified difference. Generating training data 300 based on the identified difference comprises comparing the identified difference with a user input indicative of a decision with respect to the identified difference. For example, following the identification of a difference, the signal 260 which is generated may be used to display, via the user interface 140, information relating to the identified difference. A user may then, via the user interface, provide an input indicative of a decision, for example either confirming that the identified difference represents an undesired response of the aircraft system, or instead indicating that the classifier 230, 320 is incorrect. In this case, if the classifier is incorrect, training data may be generated and used to train the classifier 230, 320 such that this mistake does not reoccur. Alternatively, if the classifier 230, 320 has correctly identified an undesired response in the aircraft system, training data can be generated which reinforces this correct identification. The availability of training data 300 has an influence on the capabilities of the classifier 230, 320 to model a desired operation of the at least part of an aircraft system 220, 300 and hence the ability to identify differences in the operation of the actual system 220, 300 and the modelled system.

In some examples, the test apparatus 100, 310 may be in communication with at least one mobile computing device, such as device 160 in Figure 1. A mobile computing device 160 may be any suitable combination of hardware and software capable of being in communication with the test apparatus 100, 310. For example, a mobile computing device may be one of a smartphone, tablet computing device, portable personal computer or any other suitable device. The test apparatus 100, 310 may be configured to receive data indicative of a decision of a user of the at least one mobile computing device 160 with respect to an operation of the at least part of an aircraft system 220, 300. The test apparatus 100, 310 may be configured to generate training data 300 based on this received data. The mobile computing devices 160 may be used by people for whom the at least part of an aircraft system 220, 300 is being designed, such as flight crew. The flight crew may be prompted by an appropriate application executing on the mobile computing device, during the operation of the system and/or the aircraft, to review one or more operating states of the aircraft and provide feedback with respect to the operation of the at least part of an aircraft system 220, 300. Such prompts may be triggered by the test apparatus 100, 310, to coincide with respective events as they occur during testing.

In other examples, the mobile computing devices 160 may be used following a test flight, wherein following the flight, the flight crew may be prompted, by the devices, to review one or more aspects of the operation of the aircraft system under test. The information generated by the decisions of the flight crew may be used to generate training data which is used to train, update or modify the classifier 230, 320. Therefore, the training data may accurately represent the expectations and the desired operation of aircraft systems as viewed from the perspective of the flight crew. This may allow the test apparatus 100, 310 to identify further operational states for which the at least part of an aircraft system does not respond and/or operate as desired.

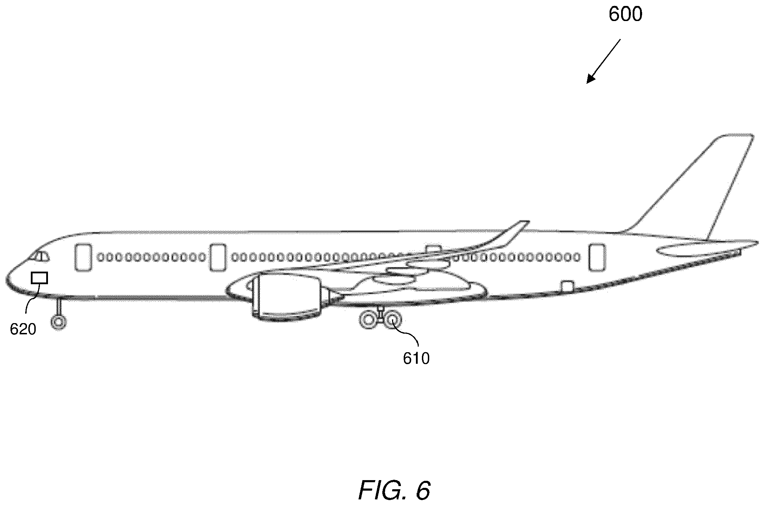

Figure 6 shows an example of an aircraft 600, which may instead be an aircraft test rig. The aircraft 600 comprises at least one aircraft system, such as a hydraulic brake 610 and a braking control system 620, which are coupled to the test apparatus 100 and provide inputs 210 thereto for testing according to examples herein.

In some examples, a test apparatus as described herein. The test apparatus is used for testing at least part of the one or more aircraft systems comprised in the test aircraft. The test aircraft may include an entire aircraft 600, such as that shown in Figure 6. Alternatively, the test aircraft may comprise one or several parts of an aircraft, for example as part of a test rig for testing one or more aircraft systems. The test aircraft includes the test apparatus which may receive inputs generated in the test aircraft. The inputs generated in the test aircraft may be provided to both an actual aircraft system being tested and the test apparatus which is testing said aircraft system. The outputs from the system and the test apparatus may then be generated in the test aircraft and a comparison of these outputs is performed.

In some examples, a test system for testing aircraft control software comprises memory, a processor, a control input interface for receiving aircraft control inputs and a control output interface for receiving aircraft control outputs. The aircraft control software may be a part of an aircraft system comprising both software and aircraft equipment for controlling the operation of an aircraft. The test system is configured to receive aircraft control inputs via the control interface, the aircraft control inputs being digital inputs representing operational states of aircraft controls. In this example, the aircraft control software may be tested in isolation. In which case, the inputs and outputs which are used are digital inputs and output which may be representative of inputs and outputs from aircraft equipment, such as aircraft controls. The control input interface comprising any suitable combination of hardware and software. In some examples, the aircraft control inputs are represented by a respective plurality of input values. The test system processes the aircraft control inputs using a trained model of expected behaviour for the aircraft control software under test to determine expected control outputs. For example, the trained model may include a classifier having been trained according to a desired operation of the aircraft control software. Actual control outputs from the aircraft control software are received via the control output interface. The actual control outputs are generated using the aircraft control software and the aircraft control inputs. Control outputs may be represented by respective sets of output values. The test system compares the expected control outputs to the actual control outputs to identify any differences between them. This may be indicative of a difference between the operation of the aircraft control software, and/or an aircraft system comprising the aircraft control software, and a desired operation of the aircraft control software. The test system then generates a signal indicative of a difference between the expected control outputs and the actual control outputs.

In another example, there is provided a test system for testing aircraft control software. The test system comprising a memory, a control input interface, a model processing engine, a control output interface, a difference engine, and an output generator.

The control input interface can receive aircraft control inputs and store the inputs in the memory. The aircraft control inputs comprise one or more input values which may represent an operational state of one or more components of the aircraft. The model processing engine is configured to process the aircraft control inputs using a trained model of expected behaviour for aircraft control software under test to determine expected control outputs and to store the outputs in the memory. The expected model may be based on further aircraft control software or generated using one or more computer models trained using data representing the expected behaviour.

The control output interface can receive actual aircraft control outputs and store the outputs in the memory. The actual aircraft control outputs are generated by operating the aircraft control software using the aircraft control inputs.

The difference engine is used to compare the expected control output to the actual control outputs to identify any differences between them. For example, the difference engine may read the actual and expected control outputs from non-volatile memory such as ROM, and may store the outputs in temporary memory and may use a processor to process the outputs to determine any differences.

The output generator may be used to generate a signal indicative of a difference identified by the difference engine.

It is to noted that the term "or" as used herein is to be interpreted to mean "and/or", unless expressly stated otherwise.

## Claims

1. Test apparatus (100) for testing at least part of an aircraft system, the apparatus (100) comprising at least one memory (110) and at least one processor (120), the test apparatus (100) comprising programme code stored in the at least one memory (110) and being configured to control the test apparatus (100) to:
obtain first data (210) comprising a plurality of input values representing an operating state of an aircraft;
process the plurality of input values using a trained classifier (230) configured to model an operation of at least part of an aircraft system (220) to generate a first set of output values (240a);
obtain second data comprising a second set of output values (240b) generated by operating the at least part of an aircraft system (220) based on the plurality of input values;
process the first (240a) and second (240b) sets of output values to identify any difference between operation of the at least part of an aircraft system (220) and the operation modelled by the trained classifier (230); and
generate a signal (260) indicative of the identified difference.

2. The test apparatus (100) according to claim 1, wherein the test apparatus (100) is configured to:
obtain training data (500) representing a desired operation of the at least part of an aircraft system (220) for at least one operating state, the training data (500) comprising at least one further plurality of input values and at least one respective set of output values; and
train the classifier (230) using the training data (500).

3. The test apparatus (100) according to claim 2, wherein the test apparatus (100) is in communication with at least one mobile computing device (160), and the test apparatus is configured to receive data indicative of a decision of a user of the at least one mobile computing device (160) with respect to an operation of the at least part of an aircraft system (220), and wherein the test apparatus (100) is configured to generate training data (500) based on the received data.

4. The test apparatus (100) according to claim 2 or claim 3, wherein the test apparatus (100) is configured to generate training data (500) based on the identified difference, and optionally, wherein generating training data (500) based on the identified difference comprises comparing the identified difference with a user input indicative of a decision with respect to the identified difference.

5. Test apparatus (100) according to any preceding claim, wherein the plurality of input values represent at least one of:
an operational state of at least one component associated with the aircraft system (220); and
an output from at least one sensor configured to sense a respective environmental condition.

6. Test apparatus (100) according to claim 5, wherein an operational state of at least one component associated with the aircraft system (220) includes a control input, the control input including at least one of:
a value representing a control input;
a value representing a rate of change of the control input; and
a value representing a difference between the control input and a further control input.

7. Test apparatus (100) according to any preceding claim, wherein the at least part of an aircraft system (220) is a computer program for controlling at least part of an aircraft or comprises a combination of aircraft equipment and the computer program for operating the aircraft.

8. Test apparatus (100) according to any one of claims 1 to 7, wherein the at least part of an aircraft system (220) comprises aircraft equipment, the aircraft equipment comprising at least one sensor for generating at least one value of the second set of output values (240b).

9. Test apparatus (100) according to any preceding claim, wherein the at least part of an aircraft system (220) includes at least one of: an avionics system, a flight control system, a braking control system, an instrumentation and recording system, a landing gear control system and a fuel system.

10. A method (400) of testing at least part of an aircraft system (220), the method (400) comprising:
obtaining first data (210) comprising a plurality of input values representing an operating state of an aircraft;
processing the plurality of input values using a trained classifier (230) configured to model an operation of at least part of an aircraft system (220) to generate a first set of output values (240a);
generating second data comprising a second set of output values (240b) by operating the at least part of an aircraft system (220) based on the plurality of input values;
processing the first (240a) and second (240b) sets of output values to identify any difference between operation of the at least part of an aircraft system (220) and the operation modelled by the trained classifier (230); and
generating a signal (260) indicative of the identified difference.

11. The method (400) of claim 10, wherein the method (400) comprises:
obtaining training data (500) representing a desired operation of the at least part of an aircraft system (220) for at least one operating state; and
training the classifier (230) using the training data (500);
wherein, optionally, the training data (500) is generated from a further aircraft system during operation of the further aircraft system.

12. The method (400) of claim 11, wherein the training data (500) is generated based on an input from a user indicative of a decision with respect to identified difference.

13. The method (400) of claim any of claims 10 to 12, wherein the method (400) comprises generating further training data based on the identified difference, and training the classifier (230) using the further training data.

14. The method (400) of any of claims 10 to 13, wherein the method comprises modifying the at least part of an aircraft system (220) based on the identified difference.

15. A test aircraft comprising one or more aircraft systems (220) and test apparatus (100) according to any one of claims 1 to 9 for testing at least part of the one or more aircraft systems (220) comprised in the test aircraft.

## Patentansprüche

1. Testeinrichtung (100) zum Testen mindestens eines Teils eines Luftfahrzeugsystems, die Einrichtung (100) umfassend mindestens einen Speicher (110) und mindestens einen Prozessor (120), die Testeinrichtung (100) umfassend einen Programmcode, der in dem mindestens einen Speicher (110) gespeichert und konfiguriert ist, um die Testeinrichtung (100) zu steuern zum:
Erhalten erster Daten (210), umfassend eine Vielzahl von Eingabewerten, die einen Betriebszustand eines Luftfahrzeugs darstellt;
Verarbeiten der Vielzahl von Eingabewerten unter Verwendung eines trainierten Klassifizierers (230), der konfiguriert ist, um einen Betrieb von mindestens einem Teil eines Luftfahrzeugsystems (220) zu modellieren, um einen ersten Satz von Ausgabewerten (240a) zu erzeugen;
Erhalten zweiter Daten, umfassend einen zweiten Satz von Ausgabewerten (240b), der durch ein Betreiben des mindestens einen Teils eines Luftfahrzeugsystems (220) basierend auf der Vielzahl von Eingabewerten erzeugt wird;
Verarbeiten des ersten (240a) und des zweiten (240b) Satzes von Ausgabewerten, um eine beliebige Differenz zwischen dem Betrieb des mindestens einen Teils eines Luftfahrzeugsystems (220) und dem Betrieb zu identifizieren, der durch den trainierten Klassifizierer (230) modelliert wird; und
Erzeugen eines Signals (260), das die identifizierte Differenz angibt.

2. Testeinrichtung (100) nach Anspruch 1, wobei die Testeinrichtung (100) konfiguriert ist zum:
Erhalten von Trainingsdaten (500), die einen gewünschten Betrieb des mindestens einen Teils eines Luftfahrzeugs (220) für mindestens einen Betriebszustand darstellen, die Trainingsdaten (500) umfassend mindestens eine weitere Vielzahl von Eingabewerten und mindestens einen jeweiligen Satz von Ausgabewerten; und
Trainieren des Klassifizierers (230) unter Verwendung der Trainingsdaten (500).

3. Testeinrichtung (100) nach Anspruch 2, wobei die Testeinrichtung (100) mit mindestens einer mobilen Rechenvorrichtung (160) in Kommunikation steht und die Testeinrichtung konfiguriert ist, um Daten zu empfangen, die eine Entscheidung eines Benutzers der mindestens einen mobilen Rechenvorrichtung (160) in Bezug auf einen Betrieb des mindestens einen Teils eines Luftfahrzeugsystems (220) angeben, und wobei die Testeinrichtung (100) konfiguriert ist, um Trainingsdaten (500) basierend auf den empfangenen Daten zu erzeugen.

4. Testeinrichtung (100) nach Anspruch 2 oder 3, wobei die Testeinrichtung (100) konfiguriert ist, um Trainingsdaten (500) basierend auf der identifizierten Differenz zu erzeugen, und optional, wobei das Erzeugen von Trainingsdaten (500) basierend auf der identifizierten Differenz ein Vergleichen der identifizierten Differenz mit einer Benutzereingabe umfasst, die eine Entscheidung in Bezug auf die identifizierte Differenz angibt.

5. Testeinrichtung (100) nach einem der vorstehenden Ansprüche, wobei die Vielzahl von Eingabewerten mindestens eines darstellt von
einem Betriebszustand von mindestens einer Komponente, die dem Luftfahrzeugsystem (220) zugeordnet ist; und
einer Ausgabe von mindestens einem Sensor, der konfiguriert ist, um eine jeweilige Umgebungsbedingung zu erfassen.

6. Testeinrichtung (100) nach Anspruch 5, wobei ein Betriebszustand mindestens einer Komponente, die dem Luftfahrzeugsystem (220) zugeordnet ist, eine Steuereingabe einschließt, wobei die Steuereingabe mindestens eines einschließt von:
einem Wert, der eine Steuereingabe darstellt;
einem Wert, der eine Änderungsrate der Steuereingabe darstellt; und
einem Wert, der eine Differenz zwischen der Steuereingabe und einer weiteren Steuereingabe darstellt.

7. Testeinrichtung (100) nach einem der vorstehenden Ansprüche, wobei der mindestens eine Teil eines Luftfahrzeugsystems (220) ein Computerprogramm zum Steuern mindestens eines Teils eines Luftfahrzeugs ist oder eine Kombination von Luftfahrzeugausrüstung und dem Computerprogramm zum Betreiben des Luftfahrzeugs umfasst.

8. Testeinrichtung (100) nach einem der Ansprüche 1 bis 7, wobei der mindestens eine Teil eines Luftfahrzeugsystems (220) die Luftfahrzeugausrüstung umfasst, die Luftfahrzeugausrüstung umfassend mindestens einen Sensor zum Erzeugen mindestens eines Werts des zweiten Satzes von Ausgabewerten (240b).

9. Testeinrichtung (100) nach einem der vorstehenden Ansprüche, wobei der mindestens eine Teil eines Luftfahrzeugsystems (220) mindestens eines einschließt von: einem Avioniksystem, einem Flugsteuersystem, einem Bremssteuersystem, einem Mess- und Aufzeichnungssystem, einem Fahrwerksteuersystem und einem Kraftstoffsystem.

10. Verfahren (400) zum Testen mindestens eines Teils eines Luftfahrzeugsystems (220), das Verfahren (400) umfassend:
Erhalten erster Daten (210), umfassend eine Vielzahl von Eingabewerten, die einen Betriebszustand eines Luftfahrzeugs darstellt;
Verarbeiten der Vielzahl von Eingabewerten unter Verwendung eines trainierten Klassifizierers (230), der konfiguriert ist, um einen Betrieb von mindestens einem Teil eines Luftfahrzeugsystems (220) zu modellieren, um einen ersten Satz von Ausgabewerten (240a) zu erzeugen;
Erzeugen zweiter Daten, umfassend einen zweiten Satz von Ausgabewerten (240b) durch Betreiben des mindestens einen Teils eines Luftfahrzeugsystems (220) basierend auf der Vielzahl von Eingabewerten;
Verarbeiten des ersten (240a) und des zweiten (240b) Satzes von Ausgabewerten, um eine beliebige Differenz zwischen dem Betrieb des mindestens einen Teils eines Luftfahrzeugsystems (220) und dem Betrieb zu identifizieren, der durch den trainierten Klassifizierer (230) modelliert wird; und
Erzeugen eines Signals (260), das die identifizierte Differenz angibt.

11. Verfahren (400) nach Anspruch 10, wobei das Verfahren (400) umfasst:
Erhalten von Trainingsdaten (500), die einen gewünschten Betrieb des mindestens einen Teils eines Luftfahrzeugs (220) für mindestens einen Betriebszustand darstellen; und
Trainieren des Klassifizierers (230) unter Verwendung der Trainingsdaten (500);
wobei, optional, die Trainingsdaten (500) während des Betriebs des weiteren Luftfahrzeugsystems aus einem weiteren Luftfahrzeugsystem erzeugt werden.

12. Verfahren (400) nach Anspruch 11, wobei die Trainingsdaten (500) basierend auf einer Eingabe von einem Benutzer erzeugt werden, der eine Entscheidung in Bezug auf die identifizierte Differenz angibt.

13. Verfahren (400) nach einem der Ansprüche 10 bis 12, wobei das Verfahren (400) das Erzeugen weiterer Trainingsdaten basierend auf der identifizierten Differenz und das Trainieren des Klassifizierers (230) unter Verwendung der weiteren Trainingsdaten umfasst.

14. Verfahren (400) nach einem der Ansprüche 10 bis 13, wobei das Verfahren ein Modifizieren des mindestens einen Teils eines Luftfahrzeugsystems (220) basierend auf der identifizierten Differenz umfasst.

15. Testluftfahrzeug, umfassend ein oder mehrere Luftfahrzeugsysteme (220), und Testeinrichtung (100) nach einem der Ansprüche 1 bis 9 zum Testen mindestens eines Teils des einen oder der mehreren Luftfahrzeugsysteme (220), die in dem Testluftfahrzeug enthalten sind.

## Revendications

1. Appareil de test (100) permettant de tester au moins une partie d'un système d'aéronef, l'appareil (100) comprenant au moins une mémoire (110) et au moins un processeur (120), l'appareil de test (100) comprenant un code de programme stocké dans l'au moins une mémoire (110) et étant configuré pour commander l'appareil de test (100) pour :
obtenir des premières données (210) comprenant une pluralité de valeurs d'entrée représentant un état de fonctionnement d'un aéronef ;
traiter la pluralité de valeurs d'entrée à l'aide d'un classificateur entraîné (230) configuré pour modéliser un fonctionnement d'au moins une partie d'un système d'aéronef (220) pour générer un premier ensemble de valeurs de sortie (240a) ;
obtenir des secondes données comprenant un second ensemble de valeurs de sortie (240b) générées en faisant fonctionner l'au moins une partie d'un système d'aéronef (220) sur la base de la pluralité de valeurs d'entrée ;
traiter les premier (240a) et second (240b) ensembles de valeurs de sortie pour identifier une différence quelconque entre le fonctionnement de l'au moins une partie d'un système d'aéronef (220) et le fonctionnement modélisé par le classificateur entraîné (230) ; et
générer un signal (260) indiquant la différence identifiée.

2. Appareil de test (100) selon la revendication 1, dans lequel l'appareil de test (100) est configuré pour :
obtenir des données d'entraînement (500) représentant un fonctionnement souhaité de l'au moins une partie d'un système d'aéronef (220) pour au moins un état de fonctionnement, les données d'entraînement (500) comprenant au moins une pluralité supplémentaire de valeurs d'entrée et au moins un ensemble respectif de valeurs de sortie ; et
entraîner le classificateur (230) à l'aide des données d'entraînement (500).

3. Appareil de test (100) selon la revendication 2, dans lequel l'appareil de test (100) est en communication avec au moins un dispositif informatique mobile (160), et l'appareil de test est configuré pour recevoir des données indiquant une décision d'un utilisateur de l'au moins un dispositif informatique mobile (160) par rapport à un fonctionnement de l'au moins une partie d'un système d'aéronef (220), et dans lequel l'appareil de test (100) est configuré pour générer des données d'entraînement (500) sur la base des données reçues.

4. Appareil de test (100) selon la revendication 2 ou la revendication 3, dans lequel l'appareil de test (100) est configuré pour générer des données d'entraînement (500) sur la base de la différence identifiée, et éventuellement, dans lequel la génération de données d'entraînement (500) sur la base de la différence identifiée comprend la comparaison de la différence identifiée avec une entrée d'utilisateur indiquant une décision par rapport à la différence identifiée.

5. Appareil de test (100) selon l'une quelconque revendication précédente, dans lequel la pluralité de valeurs d'entrée représente au moins l'un parmi
un état fonctionnel d'au moins un composant associé au système d'aéronef (220) ; et
une sortie provenant d'au moins un capteur configuré pour détecter une condition environnementale respective.

6. Appareil de test (100) selon la revendication 5, dans lequel un état fonctionnel d'au moins un composant associé au système d'aéronef (220) comporte une entrée de commande, l'entrée de commande comportant au moins l'une parmi :
une valeur représentant une entrée de commande ;
une valeur représentant un taux de changement de l'entrée de commande ; et
une valeur représentant une différence entre l'entrée de commande et une entrée de commande supplémentaire.

7. Appareil de test (100) selon l'une quelconque revendication précédente, dans lequel l'au moins une partie d'un système d'aéronef (220) est un programme d'ordinateur pour commander au moins une partie d'un aéronef ou comprend une combinaison d'équipements d'aéronefs et le programme informatique pour le fonctionnement de l'aéronef.

8. Appareil de test (100) selon l'une quelconque des revendications 1 à 7, dans lequel l'au moins une partie d'un système d'aéronef (220) comprend un équipement d'aéronef, l'équipement d'aéronef comprenant au moins un capteur pour générer au moins une valeur du second ensemble de valeurs de sortie (240b).

9. Appareil de test (100) selon l'une quelconque revendication précédente, dans lequel l'au moins une partie d'un système d'aéronef (220) comporte au moins l'un parmi : un système avionique, un système de commande de vol, un système de commande de freinage, un système d'instrumentation et d'enregistrement, un système de commande de train d'atterrissage et un système de carburant.

10. Procédé (400) de test d'au moins une partie d'un système d'aéronef (220), le procédé (400) comprenant :
l'obtention de premières données (210) comprenant une pluralité de valeurs d'entrée représentant un état de fonctionnement d'un aéronef ;
le traitement de la pluralité de valeurs d'entrée à l'aide d'un classificateur entraîné (230) configuré pour modéliser un fonctionnement d'au moins une partie d'un système d'aéronef (220) pour générer un premier ensemble de valeurs de sortie (240a) ;
la génération de secondes données comprenant un second ensemble de valeurs de sortie (240b) en faisant fonctionner l'au moins une partie d'un système d'aéronef (220) sur la base de la pluralité de valeurs d'entrée ;
le traitement des premier (240a) et second (240b) ensembles de valeurs de sortie pour identifier une différence quelconque entre le fonctionnement de l'au moins une partie d'un système d'aéronef (220) et le fonctionnement modélisé par le classificateur entraîné (230) ; et
la génération d'un signal (260) indiquant la différence identifiée.

11. Procédé (400) selon la revendication 10, dans lequel le procédé (400) comprend :
l'obtention de données d'entraînement (500) représentant un fonctionnement souhaité de l'au moins une partie d'un système d'aéronef (220) pour au moins un état de fonctionnement ; et
l'entraînement du classificateur (230) à l'aide des données d'entraînement (500) ;
dans lequel, éventuellement, les données d'entraînement (500) sont générées à partir d'un système d'aéronef supplémentaire pendant le fonctionnement du système d'aéronef supplémentaire.

12. Procédé (400) selon la revendication 11, dans lequel les données d'entraînement (500) sont générées sur la base d'une entrée provenant d'un utilisateur indiquant une décision par rapport à une différence identifiée.

13. Procédé (400) selon l'une quelconque des revendications 10 à 12, dans lequel le procédé (400) comprend la génération de données d'entraînement supplémentaires sur la base de la différence identifiée, et l'entraînement du classificateur (230) à l'aide des données d'entraînement supplémentaires.

14. Procédé (400) selon l'une quelconque des revendications 10 à 13, dans lequel le procédé comprend la modification de l'au moins une partie d'un système d'aéronef (220) sur la base de la différence identifiée.

15. Aéronef de test comprenant un ou plusieurs systèmes d'aéronef (220) et un appareil de test (100) selon l'une quelconque des revendications 1 à 9 permettant de tester au moins une partie du ou des systèmes d'aéronef (220) compris dans l'aéronef de test.
